# EUROPÄISCHE PATENTSCHRIFT

(11) **EP 1 507 640 B1**
(45) Veröffentlichungstag und Bekanntmachung des Hinweises auf die Patenterteilung: **24.01.2007**
(21) Anmeldenummer: 03737962.5
(22) Anmeldetag: 12.05.2003
(51) Int. Cl.: B29C 45/14

(54) **VERFAHREN ZUR HERSTELLUNG EINER BORSTENSTRUKTUR AN EINEM TRÄGER**
METHOD FOR THE PRODUCTION OF A BRISTLE STRUCTURE ON A CARRIER
PROCEDE POUR LA PRODUCTION D'UNE STRUCTURE DE POILS SUR UN SUPPORT

(30) Priorität: 15.05.2002 DE 10221869
(43) Veröffentlichungstag der Anmeldung: 23.02.2005
(73) Patentinhaber: GEKA BRUSH GMBH, 91572 Bechhofen-Waizendorf (DE)
(72) Erfinder: WEIHRAUCH, Georg, 69483 Wald-Michelbach (DE)
(74) Vertreter: Schneck, Herbert
(86) Internationale Anmeldenummer: PCT/EP2003/004938
(87) Internationale Veröffentlichungsnummer: WO 2003/097324

(56) Entgegenhaltungen:
- EP-A- 0 492 052
- WO-A-02/03831
- DE-A- 2 856 618
- FR-A- 2 046 347
- US-A- 2 415 961
- US-A- 2 621 369
- US-A- 4 956 139
- PATENT ABSTRACTS OF JAPAN vol. 16, no. 253 (M-1263), 9. Juni 1992 (1992-06-09) -& JP 04 062119 A (FURUKAWA ELECTRIC CO LTD:THE), 27. Februar 1992 (1992-02-27)
- PATENT ABSTRACTS OF JAPAN vol. 2003, no. 6, 3. Juni 2003 (2003-06-03) -& JP 2003 053776 A (IDEMITSU PETROCHEM CO LTD), 26. Februar 2003 (2003-02-26)

## Beschreibung

Die Erfindung betrifft ein Verfahren zur Herstellung einer Borstenstruktur an einem Träger beliebiger Art mittels eines Formwerkzeuges, das von einer Formwandung ausgehende Kanäle zum Formen von Borsten aufweist, wobei eine die Borsten bildende Formmasse unter Druck in die Kanäle eingebracht wird.

Ein Verfahren dieser Art ist beispielsweise aus der WO-A-02/03831 bekannt.

Borstenwaren, zu denen insbesondere Bürsten jeder Art, Pinsel und Besen zählen, werden überwiegend auf mechanischem Wege hergestellt, indem zunächst der Borstenträger mit Löchern gefertigt und nachträglich die Borstenbündel mechanisch eingesetzt werden. Mit dem Aufkommen von Kunststoffen sind die Bürstenkörper durch Gießen oder Spritzgießen hergestellt und die Borsten entweder in der herkömmlichen mechanischen Weise oder aber in jüngerer Zeit auch durch thermische Verfahren befestigt worden. In all diesen Fällen müssen zunächst Borsten-Monofile in einem Extrusions- oder Spinnprozess hergestellt, die Monofile gegebenenfalls geschnitten und anschließend die Borsten am Träger befestigt werden. Bei der heute noch überwiegend verwendeten Ankertechnik werden die Borsten geschlauft und mit einem Anker aus Metall in den Bürstenkörper gestanzt.

Es hat deshalb nicht an Versuchen gefehlt, zur weiteren Rationalisierung die Borsten oder Bündel zusammen mit einem Träger einstückig zu formen und den Träger mit dem Bürstenkörper zu verbinden. So ist schon vor mehr als hundert Jahren vorgeschlagen worden (GB 788/1861, GB 24 935/1896), die Borsten und einen sie verbindenden Träger aus einem elastischen Material, wie Gummi oder dergleichen, zu gießen und nachträglich an dem eigentlichen starren Bürstenkörper zu befestigen. Ferner ist es bekannt (DE 941 364,GB 2 151 971, US 301 644, 4 244 076, US 5,040,260, US 5,966,771, WO 98/03097), zu Gruppen zusammengefasste Reinigungselemente zusammen mit einem sie verbindenden Träger in einem Spritzgießvorgang herzustellen und den Träger nachträglich oder im Zweikomponenten-Spritzguss mit dem Bürstenkörper zu verbinden. Schließlich ist es bekannt, den gesamten Bürstenkörper und die Borsten als einstückiges Spritzgießteil herzustellen (US 5,926,900).

Bürsten dieser Art konnten sich in der Praxis nur in geringem Umfang z.B. im Bereich der Haarpflege oder als Einmalbürsten einführen. Grund für die mangelnde Eignung und Akzeptanz ist die Tatsache, dass spritzgegossene Borsten eine viel zu geringe Biegewechselfestigkeit aufweisen, weil sie im Gegensatz zu Borsten, die in einem Spinnprozess gewonnen werden, nicht die für die Stabilität notwendige Molekularstruktur, die sich vor allem durch eine borstenparallele Längsorientierung der Molekülketten auszeichnet, besitzen. Sie sind deshalb eher als Arbeits- oder Reinigungselemente denn als Borsten zu bezeichnen. Die mangelnde Stabilität ist insbesondere im Ansatzbereich der Arbeitselemente am Träger festzustellen, weil dort eine Orientierung der Moleküle fast vollständig fehlt. Dies führt dazu, dass die unmittelbar nach der Herstellung ordentlich ausgerichteten Arbeitselemente nach kurzer Benutzungsdauer ihre Position verändern, insbesondere sich verbiegen, abknicken und nicht wieder aufrichten (bend-recovery). Ferner erfordert diese Technologie die Verwendung ein und desselben Kunststoffs für die Arbeitselemente und den Träger, was bei hochwertigen Kunststoffen, aus denen Borsten mit hohem Anforderungsprofil bestehen müssen, zu entsprechend hohen Kosten führt. Jede Kostenreduzierung erzwingt einen Kompromiss in der Auswahl des Kunststoffs. Stets verbleiben aber die erheblichen gebrauchstechnischen Nachteile, mit der Folge, dass Bürsten dieser Art nur für wenige Anwendungsfälle geeignet sind. Es ist auch keine auf das jeweilige Anforderungsprofil abgestellte Differenzierung des Werkstoffs für den Träger und die Borsten oder für die Borsten untereinander möglich, insbesondere was die mechanische Festigkeit, den werkstoffeigenen Reibwert, die Farbe etc. betrifft.

Ferner sind Bürsten bekannt (US 2 621 639), bei denen die Arbeitselemente ("pins") keine Borsten im eigentlichen Sinn, sondern Stifte, Bolzen, Streifen oder dergleichen sind. Es handelt sich um spritzgegossene Elemente, die zumeist aus Gummi oder gummielastischen Kunststoffen, z.B. Elastomeren, bestehen und einen größeren Querschnitt, meist auch eine kürzere Länge als Borsten aufweisen. Diese gedrungene Bauart der "Borste" ist aus zwei Gründen zwingend notwendig. Zum einen wird nur dadurch eine einigermaßen befriedigende Stabilität und Wechselfestigkeit erhalten, zum anderen dürfen aus spritzgießtechnischen Gründen die Formkanäle nicht zu eng und zu tief sein, um einerseits eine ausreichende Formfüllung zu gewährleisten, andererseits ein Entformen zu ermöglichen. Die maßgeblichen Eigenschaften dieser "pins" bestehen im Wesentlichen in einer weichen Wirkung auf der von ihnen bestrichenen Oberfläche bei einem erhöhten Reibungskoeffizienten, also in einer Art Streich- und Massagewirkung und weniger in einer aktiven Bürstwirkung. Typischer Anwendungsfall sind Haarbürsten, die vornehmlich zum Vereinzeln und Ordnen der Haare dienen und die Kopfhaut nur massierend bestreichen sollen. Die Steifigkeit dieser Elemente lässt sich im Wesentlichen nur durch den Durchmesser und das Verhältnis Durchmesser/Länge sowie durch die Härte des Kunststoffs beeinflussen.

Die Bürste nach der US 2 621 639 wird durch Spritzgießen hergestellt, indem eine, flexible dünne Trägerplatte mit einer Perforation entsprechend der Anordnung der Arbeitselemente in eine Spritzgießform eingelegt wird, die eine Vielzahl von kanalartigen Formkavitäten aufweist, die an die Perforationslöcher des Trägers anschließen und zum Abformen der stiftförmigen Arbeitselemente dienen. Auf der gegenüberliegenden Seite - der Anspritzseite - sind Verteilerkanäle angeordnet, die den schmelzflüssigen Kunststoff, z.B. Nylon, zu den einzelnen Perforationslöchern und in die anschließenden Formkanäle leiten. Die Formkanäle weisen im unmittelbaren Anschluss an die Perforation des Trägers zunächst eine Erweiterung auf. Auf diese Weise wird beiderseits der dünnen Trägerplatte eine Verdickung erzeugt, so dass das Arbeitselement in beiden Richtungen axial fixiert ist. Obgleich das verwendete Nylon zur Erzielung borstenähnlicher Eigenschaften geeignet wäre, werden diese hier nicht genutzt, weil zumindest am Fuß der Reinigungselemente aufgrund der Verdickung eine längsorientierte Molekularstruktur nicht entstehen kann. Gleiches gilt für eine andere bekannte Haarbürste (EP-B1-0 120 229), bei der zunächst ein Träger mit hülsenförmigen, konischen Ansätzen gespritzt wird und anschließend in die Hülsen ein weiterer Kunststoff als Kern eingespritzt wird, der mit einer Verdickung auf der offenen Hülsenmündung aufliegt. Auf der Rückseite sind die Kerne über eine stoffeigene zweite Trägerplatte verbunden. Auch hier steht eine formschlüssige, axialfeste Verbindung beider Teile im Vordergrund und werden die Arbeitselemente dadurch noch klobiger.

Auch bei Zahnbürsten und Besen sind solche Reinigungselemente bekannt (US 5 040 260, US 5 966 771). Diese Bürsten sind zweiteilig ausgebildet. Es ist schließlich bei Zahnbürsten bekannt (US 1 924 152, 2 139 242, DE 826 440, WO 00/64307), den Borstenbesatz aus herkömmlichen Borsten mit ihrer anerkannt guten Putzwirkung und bolzen- bzw. stiftartigen Reinigungselementen aus gummielastischem Kunststoff zu kombinieren.

Die WO 02/03831 (DE 100 33 256 und DE 101 30 863) der Anmelderin, gibt ein Verfahren und eine Vorrichtung an, bei denen die bekannten Vorteile der Spritzgießtechnik genutzt werden können, gleichwohl die Herstellung nicht nur von Borstenwaren möglich wird, deren Borsten die Qualität und gebrauchstechnischen Eigenschaften von spinnextrudierten Borsten erreichen oder gar übertreffen.

Dies gelingt dadurch, dass der Träger mit nach Art von Spinndüsen wirkenden Durchbrüchen hergestellt, die Durchbrüche, an die sich die Kanäle anschließen, wenigstens auf einem Teil ihrer Höhe mit einer kleinsten Weite von ≤3mm versehen werden, das Verhältnis dieser Weite zu dem sich aus der Höhe der Durchbrüche und der Länge der Kanäle ergebenden Fließweg der Schmelze ≤ 1:5 gewählt wird und die Kunststoffschmelze von mindestens einer Seite des Trägers - der Zuführseite der Schmelze - durch die Durchbrüche hindurch unter Bildung der Borsten in die Kanäle gespritzt wird. Das vorgenannte Verhältnis wird vorzugsweise kleiner/gleich 1:10 gewählt. Die Untergrenze dieses Verhältnisses kann im Bereich von 1:250 liegen.

Mit diesem verfahren wird ein neuer Weg bei der Fertigung von Borstenwaren beschritten. Der Träger, an dem die Borsten angeordnet sind und der den Bürstenkörper selbst oder einen Teil desselben, z.B. in Form einer Einlage oder dergleichen, bilden kann, dient gleichzeitig als gleichsam verlorenes "Werkzeug" für die Erzeugung der Borsten durch Spritzgießen. An den nach Art einer Spinndüse wirkenden Durchbrüchen entsteht aufgrund von Staueffekten und Wandreibung eine Dehnströmung mit relativ hohen Scherkräften im wandnahen Bereich. Diese führen dazu, dass die Molekularstruktur innerhalb der Schmelze bzw. des Plastifikats in Strömungsrichtung orientiert wird und sich diese Orientierung in den Borsten formenden Kanälen fortsetzt, wobei die erfindungsgemäß gewählte Fließlänge der Schmelze im Verhältnis zur engsten Stelle der Durchbrüche die molekulare Längsorientierung optimiert. Diese Selbstverstärkung der Borsten durch Längsorientierung der Molekülketten tritt besonders augenfällig bei teilkristallinen Thermoplasten in Erscheinung. Hinzu kommt, dass bei der solchermaßen hergestellten Borstenware gegenüber einer einstückig hergestellten eine kurze Teillänge der Borste, nämlich deren Wurzel, in dem Träger angeordnet und von diesem abgestützt ist. Dieser Wurzelbereich ist der festigkeitsmäßig sensibelste Bereich, weil dort die Orientierung der Moleküle noch nicht vorhanden oder nur mäßig ausgeprägt ist. Durch diese Stabilisierung ergibt sich eine höhere Biegefestigkeit, insbesondere Biegewechselfestigkeit, aber auch eine höhere Zugfestigkeit. Gegenüber auf herkömmliche Weise einstückig gespritzten Borstenwaren lässt sich die für eine vorgegebene Auslenkung der Borste notwendige Biegekraft um 40% und mehr steigern. Auch der Elastizitätsmodul wird merklich angehoben. Da auch die Zugfestigkeit wesentlich erhöht wird, lassen sich die Borsten auch bei kleinem Querschnitt und großer Länge leicht entformen.

Mit dem bekannten Verfahren nach der WO 02/03831 der Anmelderin lassen sich grundsätzlich alle gießfähigen Kunststoffe verarbeiten, wobei im Hinblick auf das Anforderungsprofil für Borsten Thermoplaste oder Thermoelaste oder Mischungen (Legierungen) derselben bevorzugt eingesetzt werden, da bei diesen Kunststoffen sich auch die Molekularorientierung am ausgeprägtesten zeigt.

Vorgenanntes Verfahren der Anmelderin, wie auch das Verfahren nach der US 2 621 369 haben den Nachteil, dass das Lochbild des vorgefertigten Kunststoffträgers identisch übereinstimmen muss mit den durch die Kanäle in dem Formwerkzeug vorgegebenen Raster, insbesondere müssen die Achsen der Löcher und der Kanäle miteinander fluchten. Wird diese Forderung nicht exakt eingehalten, kommt es im Bereich der Borstenverankerung zu einem Versatz, der mit einer unerwünschten Querschnittsminderung am Borstenfuß verbunden ist, so dass die Borsten frühzeitig abreißen oder abscheren. Auf der anderen Seite lassen sich vorgelochte Borstenträger aus Kunststoff nur durch Spritzgießverfahren einigermaßen kostengünstig herstellen. Beim Spritzgießen ist nun aber stets mit einem Schrumpfen des Trägers nicht nur beim Abkühlen, sondern auch mit einem Nachschrumpfen über einen längeren Zeitraum zu rechnen, aufgrund dessen die anfangs vorhandene Maßhaltigkeit verloren geht. Zudem ist man auf schwindungsarme Kunststoffe angewiesen und damit in der Materialkombination von Borsten einerseits und Träger andererseits stark eingeengt. Will man für die Materialpaarung Borsten/Träger, insbesondere für das Material des Trägers eine größere Auswahl ermöglichen, müssen unter Umständen mehrere Spritzgießwerkzeuge vorgehalten werden.

Weitere Verfahren zur Herstellung spritzgegossener Teile sind beispielsweise aus der DE-A-2 856 618, JP-A-04-062 119, EP-A-0 492 052, US-A-4 956 139, JP-A-2003-053 776, US-A-2 415 961 und FR-A-2 046 347 bekannt.

Der Erfindung liegt die Aufgabe zugrunde, ein Verfahren vorzuschlagen, mit dem beliebige Trägermaterialien mit einer Borstenstruktur in reproduzierbarer Weise und unter Einhaltung einer gleich bleibenden Qualität hergestellt werden können.

Diese Aufgabe wird erfindungsgemäß mit dem Verfahren nach Patentanspruch 1 gelöst.

Vorteilhafte Weiterbildungen der Erfindung sind Gegenstand der abhängigen Ansprüche.

Das erfindungsgemäße Verfahren geht von einem Trägermaterial im Originalzustand aus, insbesondere weist es keine Durchgangslöcher auf, die mit den Borsten formenden Kanälen ausgefluchtet werden müssen. Es wird vielmehr der Formgebungsdruck dazu benutzt, die Durchgangslöcher mit dem notwendigen Querschnitt erst während des Formgebungsvorgangs zu erzeugen, indem die Formmasse unter dem Formgebungsdruck durch den Träger durchgeschossen wird. Das den freien Querschnitt der Kanäle überdeckende Material wird dabei seitlich und gegebenenfalls auch in "Schießrichtung" verdrängt. Das Lochbild wird in dem durch die Kanäle vorgegebenen Raster erst mit der Formgebung der Borsten erzeugt, so dass weder das Problem des Ausfluchtens der Löcher mit den Kanälen, noch das Problem der deckungsgleichen Anordnung von Löchern und Kanälen aufkommt und teure Werkzeuge für die Vorfertigung gelochter Träger vermieden werden.

Das erfindungsgemäße Verfahren ist nicht auf das Spritzgießen beschränkt, vielmehr kann beispielsweise als Formmasse eine flüssige bis plastische Masse in das Formwerkzeug eingebracht und unter dem Formgebungsdruck den Träger im Bereich der freien Querschnitte der Kanäle durchschießend und das Trägermaterial verdrängend in die Kanäle gepresst werden.

Durch das erfindungsgemäße Verfahren lassen sich also nicht nur thermoplastisch verarbeitbare Kunststoffe, sondern auch duroplastische Massen in noch plastischer Form verarbeiten, die dann erst nach dem Formgebungsvorgang aushärten. Zu nennen sind ferner flüssige Kunststoffe, die beispielsweise als Gießkerze angeboten werden.

Ferner kann als Formmasse für die Borsten eine viskoselastische Masse in das Formwerkzeug eingebracht und unter dem Formgebungsdruck den Träger im Bereich der freien Querschnitte der Kanäle durchschießend und das Trägermaterial verdrängend in die Kanäle gepresst werden. Auf diese Weise lassen sich als Trägermaterialien auch elastomere oder andere gummiartige Massen, wie Latex, verarbeiten, wobei gewährleistet ist, dass der Träger stets aber auch nur an denjenigen Stellen perforiert wird, wo sich ein Borsten formender Kanal befindet.

Die Formmasse kann schließlich auch als feste Masse in das Formwerkzeug eingebracht werden, solange sie unter einem entsprechend hohen technisch realisierbaren Druck bis zu 5000 bar (5 x 10⁵ kPa) plastisch verformbar ist. Unter dem Formengebungsdruck durchschießt die plastische Masse den Träger im Bereich der freien Querschnitte der Kanäle, verdrängt das Trägermaterial zur Seite und/oder in "Schussrichtung", bevor sie in die Kanäle gepresst wird.

Bei den vorgenannten Verfahren kann die Formgebung der Formmasse gegebenenfalls durch Wärmezufuhr unterstützt werden. Dies empfiehlt sich vor allem dann, wenn die Formmasse aus reaktiven Komponenten, wie beispielsweise Duroplasten, besteht, um das Aushärten zu beschleunigen.

In besonders vorteilhafter Weise ist das Verfahren durchführbar, wenn die Formmasse für die Borsten eine Schmelze ist und die Schmelze im Wege des Spritzgießens oder Druckgießens den Träger im Bereich der freien Querschnitte der Kanäle durchschießend und das Trägermaterial verdrängend in die Kanäle eingebracht wird. Hierbei haben sich spezifische Spritzdrucke zwischen 1000 und 5000 bar (1 x 10⁵ kPa bis 5 x 10⁵ kPa) als günstige Parameter erwiesen, wobei in den Borsten formenden Kanälen noch ein spezifischer Druck von größer als 300 bis 600 bar (0,3 x 10⁵ bis 0,6 x 10⁵kPa) erreicht wird, der für eine gute Formfüllung auch bei engen Kanälen ausreichend ist. Beim Spritzgießen und Druckgießen kommt ein das Durchdringen des Trägers unterschiedlicher Effekt hinzu. Der eigentlichen Schmelzfront läuft eine Druckwelle voraus, die die im Formwerkzeug enthaltene Luft verdrängt. Diese Luft-Druckwelle, die zudem eine erhöhte Temperatur aufweist, trifft zuerst auf den Träger, bevor die eigentliche Schmelzfront eintrifft.

Da sich mit dem erfindungsgemäßen Verfahren Borstenstrukturen an Trägermaterialien beliebiger Art herstellen lassen, ist lediglich dafür zu sorgen, dass der Formgebungsdruck in Abhängigkeit von der Dicke und den Materialeigenschaften des Trägers so eingestellt wird, dass der Träger unter Wirkung des Drucks im Bereich der Öffnungen der Kanäle perforiert wird.

Das beim Durchdringen des Trägers von der Formmasse verdrängte Trägermaterial kann zumindest teilweise in die Öffnungen der Kanäle verdrängt werden und dadurch eine Art Kragen bilden, der die einzelne Borste im Bereich des Borstenfußes bandagiert.

Ferner kann der Druck in Abhängigkeit von der Materialwahl für den Träger so gesteuert werden, dass das beim Durchdringen des Trägers von der Formmasse verdrängte Trägermaterial ähnlich einem Einschusstrichter unter Bildung eines trichterförmigen Lochs im Träger geformt wird.

Um bei einer solchen Kragenbildung den Querschnitt der Borsten im Fuß nicht zu schwächen, kann ferner vorgesehen sein, dass die die Borsten formenden Kanäle im Bereich ihrer Öffnung mit einer Erweiterung zur Aufnahme des zu einem Kragen geformten Trägermaterials versehen werden. Auf diese Weise kann sich die Molekularstruktur der Borste ungehindert ausbilden und insbesondere die gewünschte molekulare Längsorientierung in der Borste erreicht werden.

Das Trägermaterial kann auch so ausgewählt werden, dass das beim Durchdringen des Trägers von der Formmasse verdrängte Trägermaterial mit der die Borsten formenden Masse eine Legierung bildet, um der Borste besondere Eigenschaften zu verleihen.

Vorzugsweise wird der Träger vor dem Anlegen an die Formwandung in seinen die Öffnungen der Kanäle überdeckenden Bereichen mit materialschwächenden Strukturen versehen, die von einfachen Ausdünnungen des Trägers, von Sacklöchern bis zu radialsymmetrisch angeordneten Sollbruchstellen reichen können.

In einer Ausführungsvariante kann in dem Formwerkzeug vor den Kanälen wenigstens ein mit fluchtenden Löchern versehener weiterer Träger angelegt und der von der Formmasse zu durchdringende Träger die Löcher des weiteren Trägers überdeckend angelegt werden. In diesem Fall werden nicht unmittelbar die freien Querschnitte der Borsten formenden Kanäle als "Perforationsschablone", sondern die sie in den Formraum verlängernden Löcher des weiteren Trägers wirksam. Das beim Durchschießen der die Borsten formenden Masse verdrängte Trägermaterial wird in die Löcher des weiteren Trägers verdrängt werden, wodurch sich eine besonders gute Bandagierung der Borsten im Bereich des Borstenfußes ergibt.

Die Anordnung kann auch so getroffen werden, dass der die freien Querschnitte der Kanäle überdeckende Träger unmittelbar an die die Kanäle umgebenden Formwandung angelegt und der weitere Träger auf diesen aufgelegt wird, so dass eine Art "Lochstanze" gebildet wird, die das Durchschießen des Trägers vereinfacht.

Als weitere Maßnahme, die das Durchschießen des Trägers erleichtert, kann der Öffnungsrand der Borsten formenden Kanäle profiliert und erst anschließend in eine glatte Wandung übergehen.

Der die freien Querschnitte der Kanäle überdeckende Träger erfüllt insbesondere beim Spritzgießen der Masse eine weitere Funktion als druckhaltende Barriere, d.h. der üblicherweise vom Spritzgießaggregat bis in den Formraum auftretende Druckabfall wird durch kurzfristiges Aufstauen der Formmasse am Trägermaterial zum Teil aufgehoben, so dass die Formmasse noch mit ausreichend hohem spezifischem Druck in die Kanäle die Borsten formend eindringt. Praktische Versuche haben gezeigt, dass der spezifische Spritzdruck vor der Einspritzschnecke von 2100 bar (2,10 x 10⁵ kPa) bis ca. 600 bar (0,6 x 10⁵ kPa) im Innenraum absinken kann, während bei Überdecken der Kanäle mit dem Träger der Forminnendruck annähernd auf dem spezifischen Spritzdruck vor der Schnecke gehalten werden kann. Auch die Kompressibilität von thermoplastischen Kunststoffschmelzen von bis zu 10% unterstützt die Druckhaltung vor dem Durchbruch des Trägers. Dadurch kommt es zu der gewünscht hohen Fließgeschwindigkeit der Spritzgießmasse in den die Borsten formenden Kanälen, die wiederum für eine erhöhte Scherwirkung und damit für eine gute Längsorientierung unter Bildung von Nadelkristallen bei thermoplastischen Kunststoffen verantwortlich ist. Durch die Dicke des Trägers und die dadurch gegebene Druckhaltung im Forminnenraum lässt sich also auch die Qualität der erzeugten Borsten beeinflussen. Bei entsprechend hohem Forminnendruck geschieht das Eindringen der Schmelze in die Borsten formenden Kanäle explosionsartig. Optimierende Verfahrensparameter und konstruktive Maßnahmen sind in den nicht veröffentlichten Patentanmeldungen der Anmelderin angegeben (DE 102 01 635.5 vom 17.01.2002 und DE 102 12 781.8 vom 21.03.2002).

Wie schon angedeutet, kann der Träger aus beliebigen Materialien, insbesondere aus organischen oder anorganischen Materialien bestehen.

Er kann aus einer Folie, vorzugsweise einer Dehnfolie gebildet sein, die beim Durchschießen einen absolut dichten Abschluss im Bereich des Borstenansatzes gewährleistet. Der Träger kann auch aus einer Metallfolie gebildet sein, die an der fertigen Borstenware dekorative und/oder chemisch/physikalische Wirkungen je nach Verwendungszweck der Borstenware erfüllen kann.

Stattdessen kann der Träger auch aus einer Kunststofffolie, insbesondere auch einer Elastomerfolie gebildet sein, die der fertigen Borstenware an der Borstenseite anwendungsspezifische Eigenschaften verleiht.

Vorzugsweise werden Folien mit einer Dicke ≤ 1 mm eingesetzt, die in der Regel vorbereitende Sollbruchstellen bei entsprechendem Formgebungsdruck perforiert werden.

Der Träger kann auch von einer Platte gebildet werden, die eine Dicke von vorzugsweise ≥ 0,2 mm aufweist.

Der Träger kann auch aus zwei oder mehr Schichten bzw. laminierten Folien gebildet sein, wobei vorzugsweise eine sehr dünne Außenschicht vorgesehen ist, die das Anpassen des Borstenträgers an die Innenkontur des Formwerkzeugs erleichtert. Die Vorteile einer solchen Ausbildung sind später in Verbindung mit weiteren Verfahrensvarianten beschrieben.

Bei einem Träger aus zwei oder mehr Schichten kann wenigstens eine Schicht die Öffnungen der Kanäle überdecken und wenigstens eine weitere mit vorgeformten Löchern entsprechend der Anordnung der Kanäle versehen werden.

Die zwei oder mehr Schichten bestehen vorzugsweise aus unterschiedlichen Werkstoffen mit insbesondere unterschiedlicher Elastizität.

Der Träger kann als vorgefertigtes Formteil in das geöffnete Formwerkzeug zugeführt werden. Es kann sich beispielsweise um ein Blasformteil, ein Spritzgussteil oder ein Tiefziehteil handeln.

Die Träger können auch als Endlosmaterial in das geöffnete Formwerkzeug zugeführt und vor oder beim Schließen des Formwerkzeugs auf Sollmaß geschnitten werden. Stattdessen können die Träger mit Sollmaß auf einer Endlosunterlage zugeführt und im Bereich des Formwerkzeugs von der Unterlage getrennt werden.

Weiterhin können der Werkstoff des die freien Querschnitte der Kanäle überdeckenden Trägers mit dem Werkstoff der Borsten verschweißbar sein, wobei sich verschiedene Kunststoffpaarungen anbieten.

Das erfindungsgemäße Verfahren gibt ferner die Möglichkeit, in das Formwerkzeug Borsten bildende Kunststoffe unterschiedlicher mechanischer Eigenschaften abschnittsweise einzubringen, so dass die gesamte Borstenstruktur aus Borsten unterschiedlicher Eigenschaften aufgebaut ist. Ferner können in das Formwerkzeug Borsten bildende Kunststoffe mit unterschiedlicher Farbe abschnittsweise eingebracht werden, um Borstenfelder unterschiedlicher Art und visualisieren.

Das erfindungsgemäße Verfahren führt stets zu einzeln stehenden Borsten, die je nach Anordnung der Borsten formenden Kanäle auf geringen bis mäßigen Abstand stehen. Eine Borstenstruktur aus solchen einzeln stehenden Borsten haben sich vor allem bei Bürsten und Pinsel mit erhöhten Hygieneanforderungen als vorteilhaft erwiesen, weil sich Schmutz oder Applikationsprodukte, die mit der Bürste oder dem Pinsel aufgetragen werden, weit weniger zwischen den Borsten festsetzen, als bei Borstenbündeln und insbesondere solche Borsten oder Pinsel auch einwandfrei ausgespült und gereinigt werden können.

In einer anderen Ausführung des verfahrens wird das Trägermaterial als Rohformteil oder als Zuschnitt in das Formwerkzeug eingelegt und mittels des Formgebungsdrucks der Formmasse auf die die freien Querschnitte der Kanäle umgebende Formwandung aufgeformt, bevor die Formmasse den ausgeformten Träger durchdringt. In diesem Fall wird die endgültige Kontur des Trägers erst im Formwerkzeug durch den Formgebungsdruck der Formmasse erzeugt. Hierfür eignen sich insbesondere folienartige dünne Träger, gegebenenfalls auch in zweischichtiger Ausführung.

In einer anderen Variante kann das Trägermaterial als Rohformteil oder Zuschnitt in das Formwerkzeug eingelegt und mittels Fluiddruck auf die die freien Querschnitte der Kanäle umgebende Formwandung aufgeformt werden, bevor die die Borsten formende Masse in das Formwerkzeug mit einem höheren Formgebungsdruck zugeführt wird. Das Fremdfluid dient hier lediglich als formgebendes Medium, das entweder vor dem Einspritzen der Formmasse aus dem Formwerkzeug entfernt oder aber durch eine weitere nachgespritzte Formmasse selbst aus dem Formwerkzeug verdrängt wird.

Stattdessen kann das Trägermaterial und die die Borsten bildende Formmasse im Sandwich-Spritzgießverfahren in das Formwerkzeug eingebracht werden. Dies kann im Mono- oder Twinshot-Verfahren geschehen.

Verfahren, die mit einem Fremdfluid zum Aufformen des Trägermaterials dienen, seien das GIT-Verfahren (Gas-Injection-Technology) oder das WIT-Verfahren (Water-Injection-Technology) erwähnt.

Nachstehend ist die Erfindung anhand mehrerer Ausführungsbeispiele beschrieben. In der Zeichnung zeigen:
- Fig.1: eine schematische Darstellung eines Formwerkzeugteils in einer ersten Verfahrensstufe;
- Fig.2: das Formwerkzeugteil nach Fig.1 in einer zweiten Verfahrensstufe;
- Fig.3: eine Detailansicht zu Fig.1;
- Fig.4: eine Detailansicht zu Fig.2;
- Fig.5-7: je einen stark vergrößerten Schnitt im Bereich des freien Öffnungsquerschnitts des Formkanals;
- Fig.8: eine Draufsicht auf den freien Querschnitt einer anderen Ausführung des Formkanals;
- Fig.9: einen Schnitt eines Formwerkzeugteils bei der Arbeitweise mit mehrschichtigem Träger;
- Fig.10: eine schematische Seitenansicht eines Trägers für einen Zahnbürstenkopf;
- Fig.11: eine Ansicht auf das Borstenfeld eines Zahnbürstenkopfs;
- Fig.12: eine der Fig.11 entsprechende Ansicht einer anderen Ausführungsform;
- Fig.13: ein Teilschnitt eines Zahnbürstenkopfs in einer weiteren Ausführung;
- Fig.14-17: verschiedene Ausführungsformen der Anordnung von Sollbruchstellen am Träger, jeweils in Draufsicht;
- Fig.18: eine Draufsicht auf eine Ausführungsform von Schwächungsstellen bei einem Träger nach Art einer Dehnfolie;
- Fig.19: die Ausführungsform nach Fig.18 nach der Einwirkung des Formgebungsdrucks im Schnitt;
- Fig.20-22: je eine Draufsicht auf verschiedene Ausführungen eines Trägers mit rasterartig angeordneten Sollbruchstellen;
- Fig.23-30: verschiedene Ausführungen von Sollbruchstellen an dickeren Trägern, jeweils im Schnitt;
- Fig.31: einen schematisch wiedergegebenen Ausschnitt eines Trägers mit unterschiedlichen Sollbruchstellen und verschiedenen Formmassen;
- Fig.32: einen ausschnittsweisen Schnitt eines Trägers mit formgebendem Ansatz;
- Fig.33: den Träger gemäß Fig.32 nach dem Einbringen der Formmasse;
- Fig.34: einen Ausschnitt einer gegenüber Fig.32 abgewandelten Ausführung;
- Fig.35: die Ausführungsform nach Fig.34 nach Einbringen der Formmasse;
- Fig.36: eine schematische Darstellung des Sandwich-Spritzgießens im Mono-Verfahren;
- Fig.37: das mit dem Verfahren gemäß Fig.36 hergestellte Erzeugnis;
- Fig.38: eine im schematischen Schnitt wiedergegebene Spritzgießanlage nach dem Twinshot-Verfahren;
- Fig.39,40: einen Zahnbürstenkopf im Längs- und Querschnitt;
- Fig.41: einen sternförmigen Zuschnitt aus streifenförmigen Borstenelementen in Draufsicht;
- Fig.42: eine Seitenansicht auf einen streifenförmigen Teil des Zuschnitts gemäß Fig.41 und
- Fig.43: einen Schnitt durch den streifenförmigen Zuschnitt.

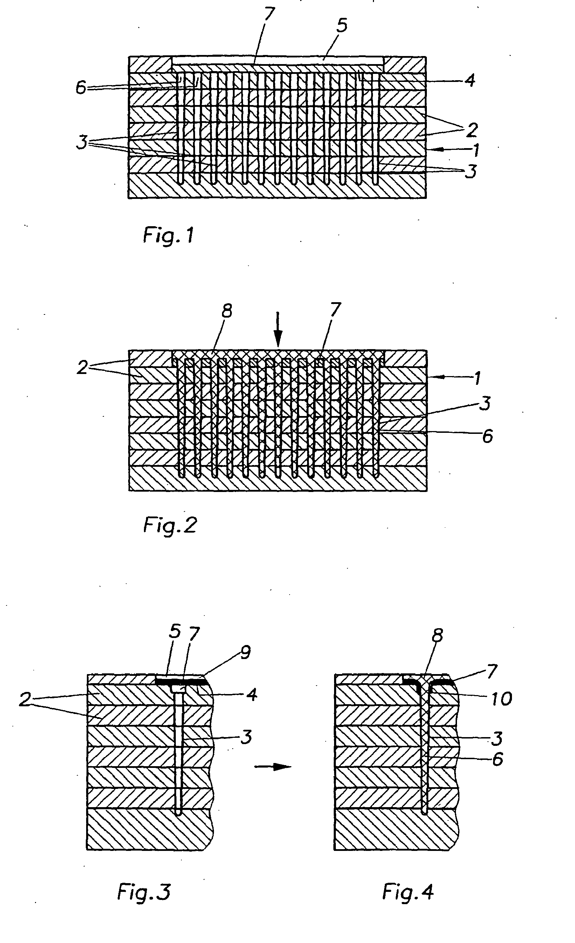

Fig.1 zeigt schematisch ein Formwerkzeug 1 bzw. nur einen Teil desselben, das vorzugsweise nicht massiv ausgebildet ist, sondern aus parallel geschichteten Platten 2 aufgebaut ist, deren Aufgabe und Wirkung in der WO 02/03 831 (DE 100 33 256 und DE 101 30 863) und in den nicht veröffentlichten Patentanmeldungen DE 103 01 635.6 und DE 102 12 781.8 der Anmelderin näher beschrieben sind. Das Formwerkzeug weist in seinem Werkzeugteil 1 eine Mehrzahl von vorzugsweise parallel angeordneten Kanälen 3 auf, in denen die Borsten geformt werden. Die Kanäle 3 gehen von der Formwandung 4 aus und laufen vorzugsweise mit einer schwachen Konizität zu ihrem geschlossenen Ende zu. In die Formkavität 5 wird ein die freien Querschnitte 6 der Formkanäle 3 überdeckender Träger 7 auf die Formwandung 4 aufgelegt.

Das Formwerkzeug kann ein Spritzgieß-, Druckgieß- oder Pressformwerkzeug sein. Die Formmasse für die Borsten wird in den Forminnenraum 5 mit einem solchen Druck aufgegeben, dass der Träger 7 im Bereich der freien Querschnitte 6 der Formkanäle 3 durchdrungen bzw. durchschossen wird, wie dies in Fig.2 gezeigt ist. Nach dem Durchdringen bzw. Durchschießen des Trägers 7 kann die die Borsten 6 in den Kanälen 3 bildende Formmasse gleichzeitig den Rücken des Trägers 7, wie bei 8 angedeutet, abdecken und damit einen kompletten Träger eines Borstenelementes bilden.

In Fig.3 und 4 ist eine Variante detailliert anhand eines einzigen Formkanals 3 gezeigt. In diesem Fall weist der Formkanal 3 an seinem Einlauf eine Erweiterung 9 auf, in die das beim Durchdringen bzw. Durchschießen des Trägers 7 verdrängte Trägermaterial hineingeformt wird (Fig.4). In der Erweiterung 9 bildet sich dadurch ein Kragen 10 aus, der die Borste 6 in ihrem Fußbereich abstützt. Zum Entformen werden die Platten einzeln oder in Gruppen abgerückt, so dass die Borste 6 auch bei größerer Länge einwandfrei entformt werden kann.

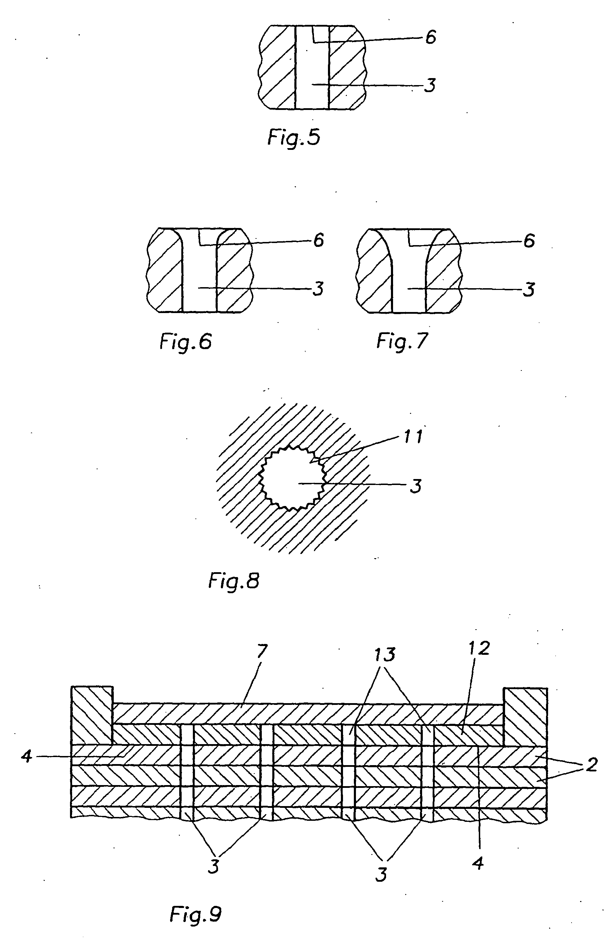

In den Fig.5 bis 7 sind vergrößerte Detailschnitte im Einlaufbereich des Borsten formenden Kanals 3 gezeigt, durch die sich die Art der Ausbildung des Kragens bzw. die Verdrängung des Trägermaterials beim Durchdringen der Formmasse beeinflussen lässt. Ist der Einlauf scharfkantig, wie in Fig.5 gezeigt, fördert dies den Durchbruch des Trägermaterials im Bereich des freien Querschnitts 6 des Formkanals, erhöht aber gleichzeitig nachteilig die Wahrscheinlichkeit, dass das Trägermaterial in den Formkanal 3 mitgeschleppt wird. Weist der Formkanal 3 im Bereich seines freien Querschnitts 6 einen mehr oder minder trichterförmigen Einlauf auf, wird das von der Formmasse unter dem Formgebungsdruck verdrängte Trägermaterial gleichmäßig in den Formkanal zur Bildung eines einwandfreien Kragens verdrängt. Dadurch erhält die erzeugte Borste eine bessere Statik.

Bei dem Ausführungsbeispiel gemäß Fig.8, die eine Draufsicht auf den Einlaufbereich des Formkanals 3 zeigt, ist dieser zumindest im Bereich seines freien Querschnittes 6 wellenförmig ausgebildet, wie mit dem Bezugszeichen 11 angedeutet. Diese Ausbildung fördert das Durchdringen der Formmasse durch den Träger 7. Die Profilierung kann über die gesamte Länge des Formkanals beibehalten werden oder aber kann die Profilierung auch in einen glattwandigen Formkanal langsam übergehen.

Nach Fig. 9 wird auf die Formwandung 4, von der die Formkanäle 3 ausgehen, zunächst ein weiterer Träger 12 mit Durchgangslöchern 13 aufgelegt, auf den dann der eigentliche die Formkanäle 3 bzw. die Löcher 13 überdeckende Träger 7 aufgelegt wird. Die Durchgangslöcher 13 können einen etwas größeren Durchmesser aufweisen. Unter dem Formgebungsdruck durchdringt die Formmasse den Träger 7 im Bereich der Durchgangslöcher 13, die das verdrängte Trägermaterial aufnehmen. Die Träger 7 und 12 können insbesondere aus verschiedenen Materialien bestehen, beispielsweise der Träger 12 aus einem vergleichsweise weichen Elastomer und der Träger 7 aus einem härteren Werkstoff bestehen. Stattdessen kann der Träger 7 auch unmittelbar auf die Formwandung 4 aufgelegt und auf diesen ein dem Träger 12 ähnlicher Träger aufgelegt sein. Auch in diesem Fall ist eine Hart/Weich-Kombination der Materialien denkbar.

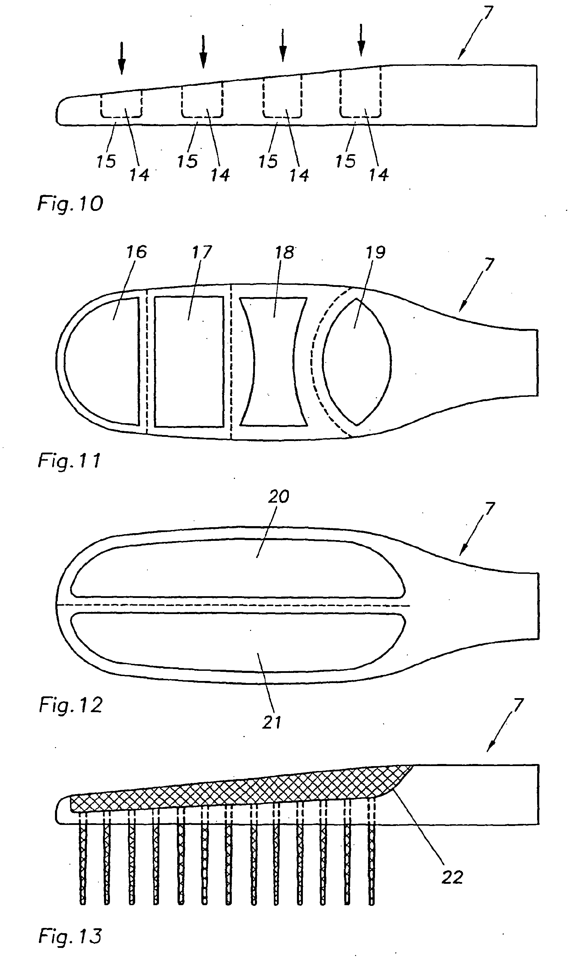

Fig.10 zeigt einen Träger 7, wie er beispielsweise für die Herstellung einer Zahnbürste im Kopfbereich vorgesehen ist. Dieser Träger weist über seine Länge eine abnehmende Dicke auf, um ihm beispielsweise eine progressive Flexibilität zu geben. Um dennoch beim Einspritzen der Formmasse gleiche Verhältnisse zu schaffen, ist der Träger 7 mit Sacklöchern 14 in einer solchen Tiefe versehen, dass der von der Formmasse zu durchdringende bzw. zu durchschießende Wandstärke 15 stets dieselbe ist.

Dabei können dem Sackloch 14 bzw. dem zu durchdringenden Querschnitt 14 gegebenenfalls auch mehrere Formkanäle zugeordnet sein, so dass sich wie aus Fig. 11 und 12 ersichtlich, ein Borstenbesatz mit unterschiedlich konfigurierten Borstenfeldern 16, 17, 18 und 19 oder längs verlaufenden Borstenfeldern 20, 21 gemäß Fig.11 erhalten lassen. Die die Sacklöcher 14 füllende Formmasse für Borsten kann auch eine durchgehende Einsenkung 22 auf der Rückseite des Trägers 7 ausfüllen, wie in Fig.13 gezeigt.

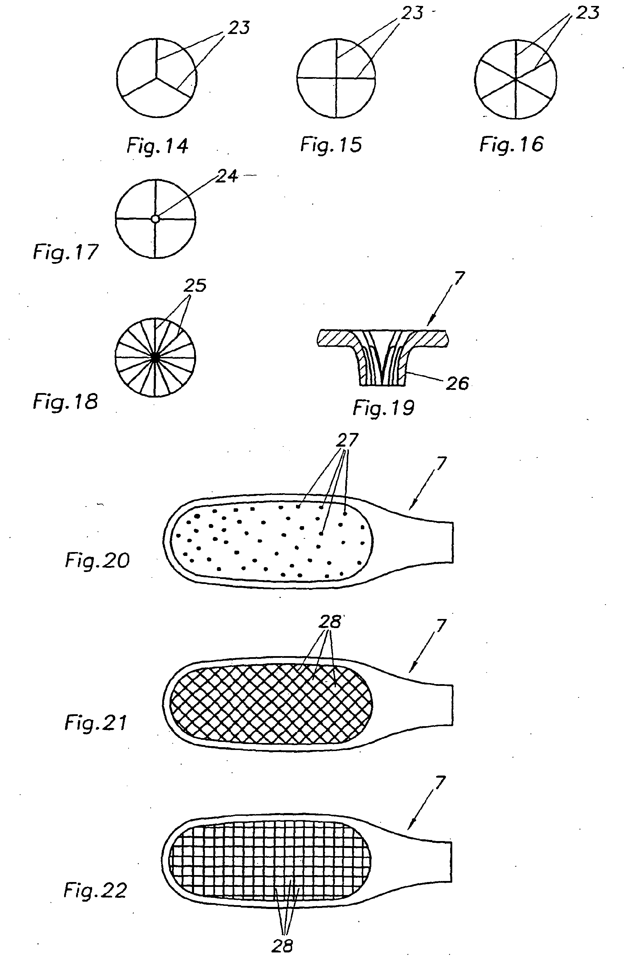

In den Fig.14 bis 17 sind verschiedene Ausführungsformen zur Schwächung des Trägers 7 im Bereich der freien Querschnitte der Borsten formenden Kanäle gezeigt. Es handelt sich vorzugsweise um jeweils radialsymmetrische Sollbruchstellen 23 in verschiedener Konfiguration, wobei gegebenenfalls im Zentrum noch eine besonders stark ausgedünnte Sollbruchstelle 24 (Fig.17) vorgesehen ist.

Bei dünnen Trägern, insbesondere Dehnfolien, kann wiederum durch radialsymmetrische Anordnung von Schwächungslinien 25 erreicht werden, dass bei einem Durchdringen der Formmasse die Folie nicht aufreißt, sondern sich trichterförmig aufdehnt, wie in Fig.18 und 19 gezeigt ist, so dass ein einwandfreier Kragen 26 erhalten wird. Sowohl das Aufbrechen der ausgedünnten Stellen, als auch das in Bezug auf Fig.18 und 19 beschriebene Aufdehnen wird bei schmelzflüssigen Formmassen, beispielsweise beim Druck- oder Spritzgießen, noch durch die Temperatur der Schmelze und durch die der Schmelze vorauslaufenden Druckwelle die aus dem Formraum verdrängte Luft begünstigt. Besteht beispielsweise der Träger aus Polypropylen mit einer Schmelztemperatur von 160 Grad und die Borsten aus Polyamid 6.6 mit einer Schmelztemperatur von 260 Grad wird augenscheinlich, dass die Temperatur auf das Aufbrechen und Verdrängen des Trägermaterials einen wesentlichen Einfluss hat. Umgekehrt kann durch eine Werkstoffpaarung mit nahe beieinander liegenden Schmelztemperaturen ein Aufschmelzen und Verschweißen von Trägermaterial und Borstenmaterial erfolgen.

Insbesondere bei einem sehr dichten Borstenstand kann der Träger 7 mit rasterartig angeordneten, punktförmigen Sollbruchstellen 27 (Fig.20) oder mit Sollbruchstellen in einem Linienraster 28, wie Fig.21 und 22 zeigt, versehen sein.

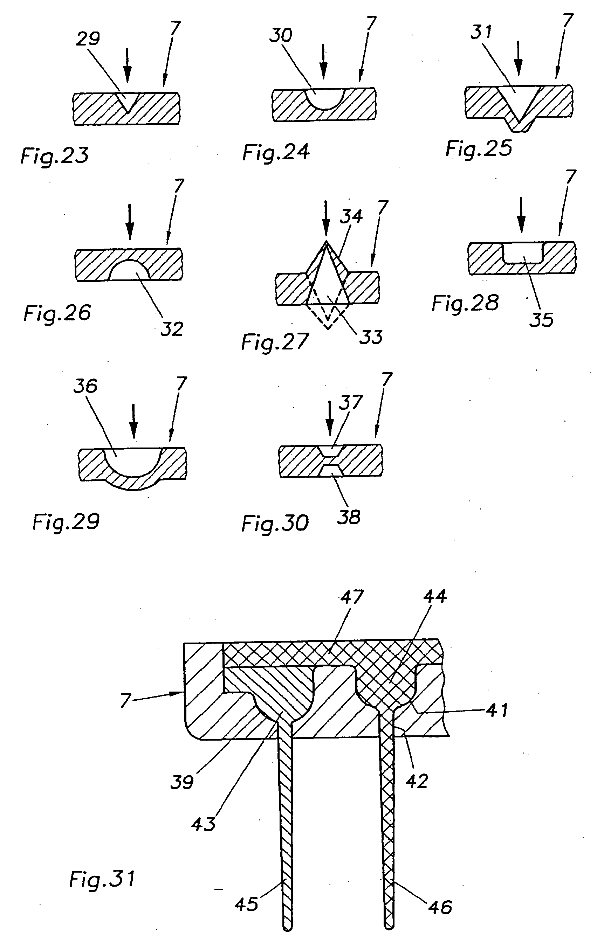

In den Fig.23 bis 30 sind verschiedene Ausführungen von Sollbruchstellen, insbesondere in dickeren Trägern gezeigt. Fig.23 zeigt eine trichterförmige Sollbruchstelle 29, die jeweils einem Borsten formenden Kanal zugeordnet ist. Fig.24 zeigt eine muldenförmige Sollbruchstelle 30, während Fig.25 eine trichterförmige Sollbruchstelle 31 mit einer Ausformung 32 auf der gegenüber liegenden Seite wiedergibt. Diese Formgebung unterstützt insbesondere eine einwandfreie Kragenbildung. Diese Sollbruchstellen können auf derjenigen Seite des Trägers 7 angeordnet sein, die dem Formgebungsdruck zugekehrt ist oder aber, wie Fig.26 zeigt, dem Formgebungsdruck abgekehrt ist. Hierbei handelt es sich wieder um eine kalottenförmige Sollbruchstelle 32.

In Fig.27 ist der Träger 7 wiederum von der dem Formgebungsdruck abgekehrten Seite mit einer trichterförmigen Sollbruchstelle 33 versehen, die sich auf der dem Formgebungsdruck zugekehrten Seite zu einer Kegel- oder Pyramidenspitze 34 erweitert. Bei Einwirkung des Formgebungsdrucks wird die Spitze 34 in Richtung auf den Borsten formenden Kanal umgestülpt, wie dies mit gestrichelten Linien wiedergegeben ist. Schließlich zeigt Fig.28 eine napfförmige Sollbruchstelle 35.

Die Sollbruchstelle 36 gemäß Fig.29 weicht von der gemäß Fig.24 dadurch ab, dass das Trägermaterial zusätzlich in Richtung zum Borsten formenden Kanal gewölbt ist. Schließlich zeigt Fig.30 eine Materialschwächung des Trägers 7 von beiden Seiten durch je eine Mulde 37 und 38.

Fig.31 zeigt einen Träger 7 mit Sollbruchstellen, die zu einer unterschiedlichen Schwächung des Trägers führen. Die kalottenförmige Einsenkung 39 belässt einen Materialsteg 40 von geringerer Stärke als die kalottenförmige Einsenkung 41, so dass eine dickere Wandstärke 42 verbleibt. Durch Einspritzen einer ersten Formmasse 43 unter einem bestimmten Formgebungsdruck brechen diejenigen Stellen mit der geringeren Restwandstärke 40 auf. Durch anschließendes Einspritzen einer weiteren Formmasse 44 mit höherem Formgebungsdruck brechen auch die Sollbruchstellen mit größerer Restwandstärke 42 auf. Auf diese Weise können Borsten 45, 46 aus unterschiedlichen Kunststoffen an einem einzigen Träger 7 erzeugt werden und kann die zuletzt eingespritzte Formmasse zugleich den Trägerrücken 47 bilden. Die Borsten 45, 46 können auch unterschiedliche Formen und Querschnitte besitzen, die bis zu lamellenartigen Reinigungselementen reichen können.

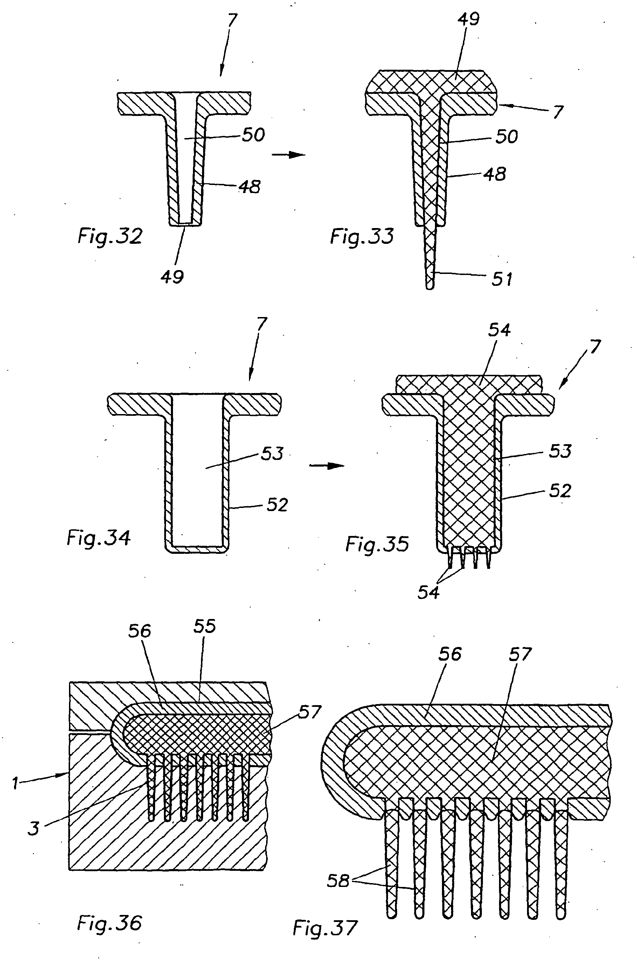

Der Träger 7 kann auf der dem Borsten formenden Kanal zugekehrten Seite Ansätze 48 aufweisen, die teilweise in den Borsten formenden Kanal eintauchen und an ihrem Ende eine Sollbruchstelle 49 aufweisen, so dass die unter dem Formgebungsdruck zugeführte Formmasse 49 zunächst den Kanal 50 im Ansatz 48 ausfüllt, bevor sie die Sollbruchstelle 49 durchbricht und in den Formkanal eindringt, um eine Borste 51 zu bilden, die auf einer großen Länge mit dem Ansatz 48 bandagiert ist (Fig.33).

Auch der Träger gemäß Fig.34 weist einen Ansatz 52 mit einem Sackloch 53 auf, dessen Boden mehrere nicht gezeigte Dünnstellen aufweist. Nach dem Zuführen der Formmasse 54 reißt der Boden des Ansatzes 52 an den Dünnstellen auf, so dass sich kurze nadelförmige Borsten 54 an einem bolzenartigen Träger ausbilden.

Fig.36 zeigt einen schematischen Teilschnitt eines zweiteiligen Formwerkzeugs 1, das im Sandwich-Spritzgießverfahren arbeitet. Hier wird zunächst ein dem Formraum 55 nicht vollständige ausfüllende Formmasse 56 unter einem relativ geringen Formgebungsdruck eingespritzt, die sich an sämtliche Formwandungen anlegt, aufgrund des geringen Formgebungsdrucks aber nicht den Strömungswiderstand überwindet, den die freien Querschnitte der Borsten formenden Kanäle entgegensetzen, so dass die Formmasse nur in den öffnungsnahen Bereich eindringt. Da diese Formmasse aufgrund der gekühlten Formwände früh erstarrt, kann die zweite Formmasse 57 anschließend eingespritzt werden. Sie durchdringt dann die von der ersten Formmasse 56 gebildeten "Pfropfen" im Bereich der Öffnungsquerschnitte und formt diese zu Kragen um, wie dies in Fig.37 am Ansatz der Borsten 58 gezeigt ist.

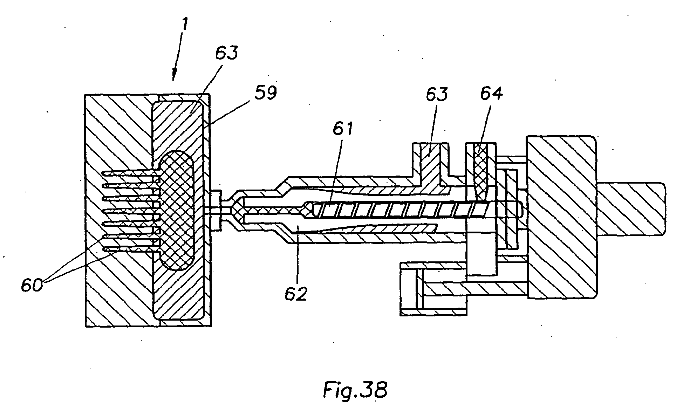

Das Sandwich-Spritzgießen kann mittels einer einzigen Einspritzschnecke erfolgen oder nach dem sogenannten Twinshot-Verfahren mit zwei konzentrischen Einspritzschnecken. Dieses Verfahren ist in Fig.38 anhand einer schematischen Darstellung wiedergebeben. Das zweiseitige Formwerkzeug 1 mit der Formkavität 59, beispielsweise für einen kompletten Bürstenkörper weist in seinem einen Teil die Borsten formenden Kanäle 60 auf. Das Spritzgießaggregat besteht aus einer inneren Einspritzschnecke 61, die in einer äußeren Einspritzschnecke 62 geführt ist und deren Spritzkanal die äußere Schnecke 62 durchsetzt. Über die äußere Einspritzschnecke 62 wird die Formmasse 63, die die Formkavität 59 nur teilweise ausfüllt, zugeführt. Dies geschieht zwar mit relativ hohem Spritzdruck an der Schnecke, jedoch wird durch den Schuss nur ein Teil der Form ausgefüllt und fällt damit der Druck in der Formkavität auf einige 10 bar (0,01 x 10⁵ kPa) ab, so dass die Formmasse 63 nicht in die Formkanäle 60 eindringt. Im zweiten Schuss wird die Formmasse 64 mit höherem Spritzdruck in einen weiteren Schuss zugeführt, da sie jedoch Form füllend eingespritzt wird, hat sie auch in der Formkavität 59 noch einen ausreichend hohen Druck, um die Formkanäle 60 auszufüllen.

Der Träger kann auch nach dem GIT-Verfahren (Gas-Injection-Technology) oder nach dem WIT-Verfahren (Water-Injection-Technology) gespritzt werden, das zunächst zu einem hohlen Formkörper als Träger führt, aus dem das Fremdfluid anschließend wieder entfernt wird. Der entstandene Hohlraum kann dann mit einer zweiten Formmasse gefüllt werden, die zugleich die Borsten formenden Kanäle ausfüllt. Auf diese Weise lassen sich beliebige Bürstenkörper mit auf ihren Verwendungszweck abgestimmten Materialien herstellen.

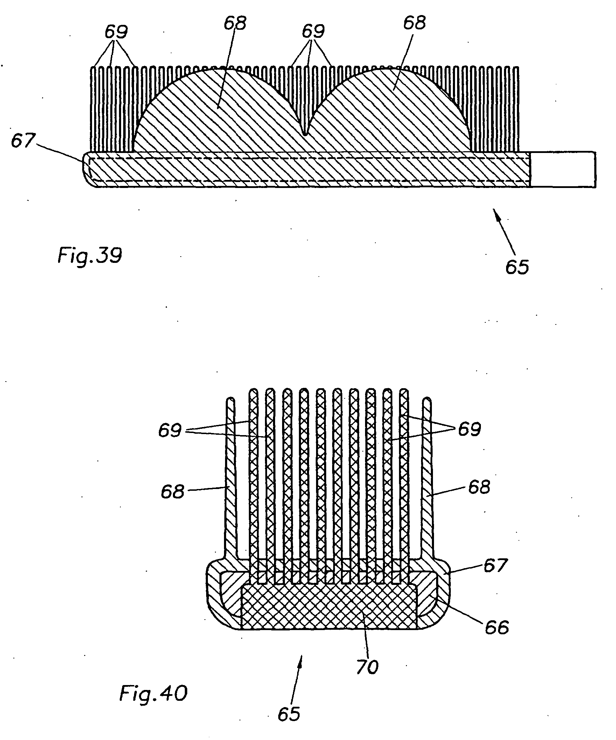

Ein Beispiel zeigen die Fig.39 und 40, die einen Zahnbürstenkopf 65 schematisch wiedergeben, wobei Fig.39 einen Längsschnitt, Fig.40 einen Querschnitt zeigen. Der Kopf besteht aus einem Kern 66 aus einem vergleichsweise harten Material, der von einem weichen Schleimhautschutz 67 umgeben ist, der wiederum einstückig mit ihm verbundene lamellenartige (blades) Reinigungs- und Massageelemente 68 aufweist, die an den Seitenflächen des Borstenbesatzes mit den Borsten 69 angeordnet sind. Der Kern 66 ist am Bürstenrücken mit der die Borsten 69 bildenden Formmasse 70 ausgefüllt. In diesem Fall wird die Formmasse für die Borsten 69 durch den Kern 66 und den Schleimhautschutz 67 durchgeschossen.

Ein- oder mehrschichtige Träger lassen sich bei ausreichender Flexibilität auf starre Träger aufwickeln, um Rundbürstenelemente zu schaffen. Sie können zu Profilen z.B. U-Profilen gebogen werden. Sie können als Dichtungen jeweils in Anpassung an den Anwendungszweck geformt und gebogen werden. Hiermit sind nur einige denkbare Anwendungen angedeutet.

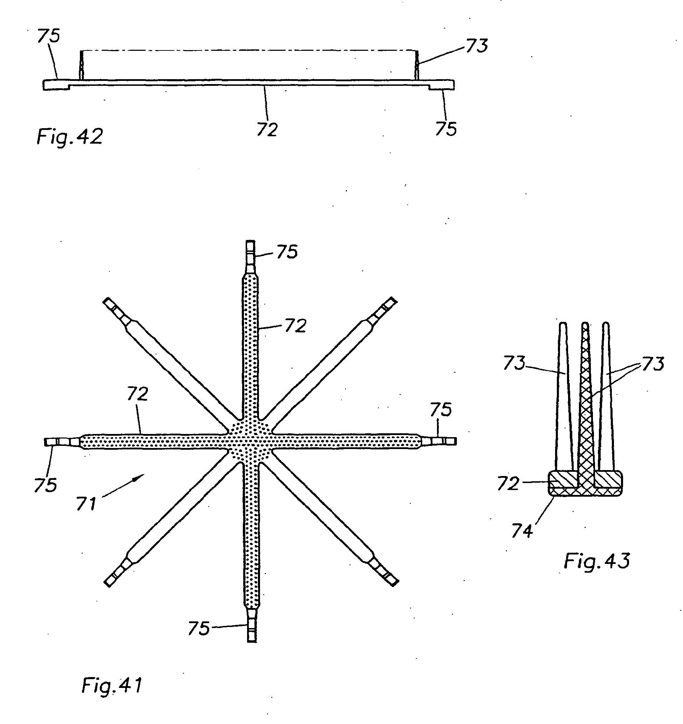

Ein Beispiel zeigen die Fig.41 bis 43. Ein sternförmiger Zuschnitt 71 aus einem biegsamen Träger 72 (Fig.43) wird in der erfindungsgemäßen Weise mit der Formmasse für die Borsten durchschossen. Die Formmasse kann zugleich eine weitere Schicht 74 bilden. An den Enden der streifenförmigen Träger 72 sind Haltelemente 75 aufgeformt, die nach Umbiegen der streifenförmigen Träger zu einem räumlichen, z.B. kugel- oder birnenförmigen Gebilde an einem Halter, einem Stiel oder dergleichen fixiert oder miteinander verbunden werden. Durch mehrere solcher sternförmigen Gebilde, die winkelversetzt zueinander angeordnet sind, wie mit den Bezugsstücken 76 angedeutet ist, und im Zentrum miteinander verbunden sind, lässt sich die räumlich wirksame Fläche vergrößern.

## Patentansprüche

1. Verfahren zur Herstellung einer Borstenstruktur an einem Träger (7) beliebiger Art mittels eines Formwerkzeugs (1), das von einer Formwandung (4) ausgehende Kanäle (3) zum Formen von Borsten aufweist, wobei eine die Borsten bildende Schmelze im Wege des Spritzgießens oder Druckgießens unter Druck in die Kanäle (3) eingebracht wird, **dadurch gekennzeichnet, daß** der Träger (7) an die die Kanäle (3) aufweisende Formwandung (4) mittelbar oder unmittelbar so angelegt wird, daß die freien Querschnitte (6) der Kanäle (3) vollständig überdeckt werden, und daraufhin die Schmelze mit einem solchen Formgebungsdruck auf den Träger (7) aufgegeben wird, daß der Träger (7) im Bereich der freien Querschnitte (6) der Kanäle (3) durchschossen und dabei das Trägermaterial verdrängt wird und schließlich die Schmelze die Kanäle (3) füllt, wobei der von der Schmelze zu durchdringende Träger (7) beim Spritzgießen der Schmelze als druckhaltende Barriere bis zum Beginn des Durchdringens der Schmelze durch den Träger wirkt, woraufhin die Schmelze explosionsartig in die die Borsten formenden Kanäle (3) eindringt.

2. Verfahren nach Anspruch 1, **dadurch gekennzeichnet, dass** das beim Durchdringen des Trägers von der Schmelze verdrängte Trägermaterial zumindest teilweise in die Öffnungen der Kanäle verdrängt wird.

3. Verfahren Anspruche 1 oder 2, **dadurch gekennzeichnet, dass** das beim Durchringen des Trägers von der Schmelze verdrängte Trägermaterial zu einem in die Öffnung der Kanäle hineinragenden Kragen geformt wird.

4. Verfahren nach einem der Ansprüche 1 bis 3, **dadurch gekennzeichnet, dass** das beim Durchdringen des Trägers von der Schmelze verdrängte Trägermaterial unter Bildung eines trichterförmigen Lochs im Träger geformt wird.

5. Verfahren nach einem der Ansprüche 1 bis 4, **dadurch gekennzeichnet, dass** die die Borsten formenden Kanäle im Bereich ihrer Öffnung mit einer Erweiterung zur Aufnahme des zu einem Kragen geformten Trägermaterials versehen werden.

6. Verfahren nach einem der Ansprüche 1 bis 5, **dadurch gekennzeichnet, dass** das beim Durchdringen des Trägers von der Schmelze verdrängte Trägermaterial mit der Schmelze eine Legierung bildet.

7. Verfahren nach einem der Ansprüche 1 bis 6, **dadurch gekennzeichnet, dass** der Träger vor dem Anlegen an die Formwandung in seinen die Öffnungen der Kanäle überdeckenden Bereichen mit materialschwächenden Strukturen versehen wird oder solche aufweist.

8. Verfahren nach einem der Ansprüche 1 bis 7, **dadurch gekennzeichnet, dass** am Träger Strukturen aus radialsymmetrisch angeordneten Sollbruchstellen angebracht werden.

9. Verfahren nach einem der Ansprüche 1 bis 8, **dadurch gekennzeichnet, dass** der Träger vor dem Anlegen an die Formwandung in seinen die Öffnungen der Kanäle überdeckenden Bereichen mit einer geringeren Dicke als in den übrigen Bereichen versehen wird.

10. Verfahren nach einem der Ansprüche 1 bis 9, **dadurch gekennzeichnet, dass** in dem Formwerkzeug vor den Kanälen wenigstens ein mit fluchtenden Löchern versehener weiterer Träger angelegt und der von der Schmelze zu durchdringende Träger die Löcher des weiteren Trägers überdeckend angelegt wird.

11. Verfahren nach einem der Ansprüche 1 bis 10, **dadurch gekennzeichnet, dass** in das Formwerkzeug vor den Kanälen wenigstens ein mit fluchtenden Löchern versehener weiterer Träger angelegt und der von der Schmelze zu durchdringende Träger zwischen dem weiteren Träger und den Öffnungen der Kanäle angelegt wird.

12. Verfahren nach einem der Ansprüche 1 bis 11, **dadurch gekennzeichnet, dass** der Träger aus organischen oder anorganischen Materialien besteht.

13. Verfahren nach einem der Ansprüche 1 bis 12, **dadurch gekennzeichnet, dass** der Träger als druckhaltende Barriere bis zu einem Forminnendruck von 1000 bar bis 5000 bar wirkt.

14. Verfahren nach einem der Ansprüche 1 bis 13, **dadurch gekennzeichnet, dass** der Träger aus einer Folie, vorzugsweise einer Dehnfolie gebildet wird.

15. Verfahren nach Anspruch 14, **dadurch gekennzeichnet, dass** der Träger aus einer Metallfolie gebildet wird.

16. Verfahren nach Anspruch 14, **dadurch gekennzeichnet, dass** der Träger aus einer Kunststofffolie gebildet wird.

17. Verfahren nach Anspruch 16, **dadurch gekennzeichnet, dass** der Träger aus einer Elastomerfolie gebildet wird.

18. Verfahren nach einem der Ansprüche 14 bis 17, **dadurch gekennzeichnet, dass** die Folie eine Dicke von vorzugsweise ≤ 1 mm aufweist.

19. Verfahren nach einem der Ansprüche 1 bis 13, **dadurch gekennzeichnet, dass** der Träger von einer Platte gebildet wird.

20. Verfahren nach Anspruch 19, **dadurch gekennzeichnet, dass** die Platte eine Dicke von vorzugsweise ≥ 0,2 mm aufweist.

21. Verfahren nach einem der Ansprüche 1 bis 20, **dadurch gekennzeichnet, dass** der Träger aus zwei oder mehr Schichten gebildet wird.

22. Verfahren nach Anspruch 21, **dadurch gekennzeichnet, dass** bei einem Träger aus zwei oder mehr Schichten wenigstens eine Schicht die Öffnungen der Kanäle überdeckt und wenigstens eine weitere Schicht mit vorgeformten Löchern entsprechend der Anordnung der Kanäle versehen wird.

23. Verfahren nach Anspruch 21 oder 22, **dadurch gekennzeichnet, dass** die zwei oder mehr Schichten aus unterschiedlichen Werkstoffen bestehen.

24. Verfahren nach einem der Ansprüche 21 bis 23, **dadurch gekennzeichnet, dass** die zwei oder mehr Schichten unterschiedliche Elastizität aufweisen.

25. Verfahren nach einem der Ansprüche 1 bis 24, **dadurch gekennzeichnet, dass** der Träger als vorgefertigtes Formteil in das geöffnete Formwerkzeug zugeführt wird.

26. Verfahren nach Anspruch 25, **dadurch gekennzeichnet, dass** der Träger als vorgefertigtes Blasformteil zugeführt wird.

27. Verfahren nach Anspruch 25, **dadurch gekennzeichnet, dass** der Träger als vorgefertigtes Spritzgussteil zugeführt wird.

28. Verfahren nach Anspruch 25, **dadurch gekennzeichnet, dass** der Träger als vorgefertigtes Tiefziehteil zugeführt wird.

29. Verfahren nach einem der Ansprüche 1 bis 28, **dadurch gekennzeichnet, dass** die Träger als Endlosmaterial in das geöffnete Formwerkzeug zugeführt und vor oder beim Schließen des Formwerkzeugs auf Sollmaß geschnitten werden.

30. Verfahren nach einem der Ansprüche 1 bis 28, **dadurch gekennzeichnet, dass** die Träger mit Sollmaß auf einer Endlosunterlage zugeführt und im Bereich des Formwerkzeugs von der Unterlage getrennt werden.

31. Verfahren nach einem der Ansprüche 1 bis 30, **dadurch gekennzeichnet, dass** der Werkstoff des die freien Querschnitte der Kanäle überdeckenden Trägers mit dem Werkstoff der Borsten verschweißbar ist.

32. Verfahren nach einem der Ansprüche 1 bis 31, **dadurch gekennzeichnet, dass** in das Formwerkzeug Borsten bildende Kunststoffe unterschiedlicher mechanischer Eigenschaften abschnittsweise eingebracht werden.

33. Verfahren nach einem der Ansprüche 1 bis 32, **dadurch gekennzeichnet, dass** in das Formwerkzeug Borsten bildende Kunststoffe mit unterschiedlicher Farbe abschnittsweise eingebracht werden.

34. Verfahren nach einem der Ansprüche 1 bis 33, **dadurch gekennzeichnet, dass** das Trägermaterial als Rohform oder als Zuschnitt in das Formwerkzeug eingelegt und mittels des Formgebungsdrucks der die Borsten formenden Schmelze auf die die freien Querschnitte der Kanäle umgebende Formwandung aufgeformt wird, bevor die Schmelze den aufgeformten Träger durchdringt.

35. Verfahren nach einem der Ansprüche 1 bis 33, **dadurch gekennzeichnet, dass** das Trägermaterial als Rohformteil oder Zuschnitt in das Formwerkzeug eingelegt und mittels Fluiddruck auf die die freien Querschnitte der Kanäle umgebende Formwandung aufgeformt wird, bevor die Schmelze in das Formwerkzeug mit einem höheren Formgebungsdruck zugeführt wird.

36. Verfahren nach einem der Ansprüche 1 bis 33, **dadurch gekennzeichnet, dass** das Trägermaterial und die die Borsten bildende Schmelze im Sandwich-Spritzgießverfahren in das Formwerkzeug eingebracht werden.

37. Verfahren nach Anspruch 36, **dadurch gekennzeichnet, dass** das Sandwich-Spritzgießverfahren als Mono- oder Twinshot-Verfahren angewendet wird.

38. Verfahren nach einem der Ansprüche 1 bis 33, **dadurch gekennzeichnet, dass** das Trägermaterial im GIT-Verfahren (Gas-Injection-Technology) vorgeformt oder in das Formwerkzeug eingebracht und die Schmelze für die Borsten nachgespritzt wird.

39. Verfahren nach einem der Ansprüche 1 bis 33, **dadurch gekennzeichnet, dass** das Trägermaterial im WIT-Verfahren (Water-Injection-Technology) vorgeformt oder in das Formwerkzeug eingebracht und die Schmelze für die Borsten nachgespritzt wird.

## Claims

1. Method for the production of a bristle structure on an arbitrary kind of carrier (7) using a mold tool (1) having channels (3) extending from a mold wall (4) for shaping bristles, wherein, during injection or pressure molding, melt is introduced into the channels under pressure for forming the bristles, **characterized in that** the carrier (7) is disposed directly or indirectly on the mold walls (4) defining the channels (3) in such a fashion that the free cross-section (6) of the channels (3) is fully covered and the melt is subsequently introduced with a sufficiently high mold pressure as to shoot-through the carrier (7) in the vicinity of the free cross-section (6) of the channels (3) and thereby displace the carrier material, wherein the melt subsequently fills the channels (3), wherein the carrier (7) which is to be penetrated by the melt acts as a pressure holding barrier during injection molding of the melt up to a point in time at which the penetration of the melt through the carrier begins and the melt subsequently penetrates explosively into the channels (3) forming the bristles.

2. Method according to claim 1, **characterized in that** the carrier material, which is displaced by the melt upon penetration through the carrier, is at least partially displaced into the openings of the channels.

3. Method according to claim 1 or 2, **characterized in that** the carrier material, which is displaced upon penetration of the melt through the carrier, is shaped into a collar projecting into the opening of the channels.

4. Method according to any one of the claims 1 to 3, **characterized in that** the carrier material, which is displaced by penetration of the melt through the carrier, is shaped with the generation of a funnel shaped hole.

5. Method according to any one of the claims 1 to 4, **characterized in that** the channels forming the bristles have an enlargement in the vicinity of their openings for acceptance of the carrier material for generating a collar.

6. Method according to any one of the claims 1 to 5, **characterized in that** the carrier material, which is displaced by the mass upon penetration through the carrier material, forms an alloy together with that mass.

7. Method according to any one of the claims 1 to 6, **characterized in that**, prior to introduction onto the walls of the mold, regions of the carrier covering the openings in the channels are given material weakening structures or have material weakening structures.

8. Method according to any one of the claims 1 to 7, **characterized in that** radially symmetric intended breaking locations are introduced onto the carrier.

9. Method according to any one of the claims 1 to 8, **characterized in that**, prior to introduction of the carrier onto the mold walls, the carrier is provided with a thickness in regions covering the openings in the channels which is reduced compared to the remaining regions.

10. Method according to any one of the claims 1 to 9, **characterized in that** at least one additional support, having aligned holes, is introduced into the molding tool in front of the channels and the carrier through which the melt penetrates is placed onto the additional carrier to cover the holes.

11. Method according to any one of the claims 1 to 10, **characterized in that** at least one additional carrier, having aligned holes, is introduced into the molding tool upstream of the channels and the carrier, which is to be penetrated by the melt, is disposed between the additional carrier and the openings in the channels.

12. Method according to any one of the claims 1 to 11, **characterized in that** the support consists essentially of an organic or inorganic material.

13. Method according to any one of the claims 1 to 12, **characterized in that** the support acts as a pressure-holding barrier up to an internal mold pressure of 1000 to 5000 bar.

14. Method according to any one of the claims 1 to 13, **characterized in that** the carrier is made from a foil, preferentially a stretching foil.

15. Method according to claim 14, **characterized in that** the carrier is made from a metallic foil.

16. Method according to claim 14, **characterized in that** the carrier is made from a plastic foil.

17. Method according to claim 16, **characterized in that** the carrier is made from an elastomer foil.

18. Method according to any one of the claims 14 to 17, **characterized in that** the foil has a thickness of preferentially ≤ 1 mm.

19. Method according to any one of the claims 1 to 13, **characterized in that** the carrier is made from a plate.

20. Method according to claim 19, **characterized in that** the plate has a thickness of preferentially ≥ 0.2 mm.

21. Method according to any one of the claims 1 to 20, **characterized in that** the support is formed from two or more layers.

22. Method according to claim 21, **characterized in that**, with a support made from two or more layers, at least one layer covers the openings in the channels and at least one additional layer is provided with holes in correspondence with the configuration of the channels.

23. Method according to claim 21 or 22, **characterized in that** the two or more layers are made from differing materials.

24. Method according to any one of the claims 21 to 23, **characterized in that** the two or more layers have differing elasticities.

25. Method according to any one of the claims 1 to 24, **characterized in that** the support is a pre-fabricated molded piece when it is introduced into the open molding tool.

26. Method according to claim 25, **characterized in that** a support is introduced as a pre-fabricated, blown molded piece.

27. Method according to claim 25, **characterized in that** the support is introduced as a pre-fabricated, injection molded component.

28. Method according to claim 25, **characterized in that** the carrier is introduced as a pre-fabricated, deep drawn component.

29. Method according to any one of the claims 1 to 28, **characterized in that** the support is introduced into the open mold tool in the form of an endless material and is cut to proper length prior to closing of the mold tool.

30. Method according to any one of the claims 1 to 28, **characterized in that** the carrier is introduced, having a desired size, onto an endless carrier and is separated from the carrier in the vicinity of the mold tool.

31. Method according to any one of the claims 1 to 30, **characterized in that** the material of the support covering the free cross-section of the channels can be welded to the material of the bristles.

32. Method according to any one of the claims 1 to 31, **characterized in that** plastics having differing mechanical properties and leading to formation of the bristles are introduced into the mold tool in sections.

33. Method according to any one of the claims 1 to 32, **characterized in that** bristle-forming plastics having differing colors are introduced into the mold tool in sections.

34. Method according to any one of the claims 1 to 33, **characterized in that** the carrier material is introduced into the mold tool in the form of a raw material or as a blank and is shaped onto the mold wall surrounding the free cross-section of the channels in response to the mold pressure of the mold mass generating the bristles, prior to the point in time in which the mold mass penetrates through the shaped carrier.

35. Method according to any one of the claims 1 to 33, **characterized in that** the carrier material is introduced into the mold tool in the form of a raw material or as a blank and is subjected to fluid pressure in response to which it is shaped on the mold walls surrounding the free cross-section of the channels, prior to the point in time at which the mold mass is introduced into the mold tool at a higher mold pressure.

36. Method according to any one of the claims 1 to 33, **characterized in that** the carrier material and the carrier mass forming the bristles are introduced into the mold tool using the sandwich injection molding procedure.

37. Method according to claim 36, **characterized in that** the sandwich injection molding procedure is carried out in a single or twin-shot procedure.

38. Method according to any one of the claims 1 to 33, **characterized in that** the carrier material is preformed using the GIT method (gas injection technology) or is introduced into the molding tool and subsequently injected with the mold mass for the bristles.

39. Method according to any one of the claims 1 to 33, **characterized in that** the carrier material is preformed using the WIT method (water injection technology) or is introduced into the mold tool, with the mold mass for the bristles being subsequently injected.

## Revendications

1. Procédé de réalisation d'une structure de poils sur un support (7) de n'importe quel genre au moyen d'un moule (1) présentant des canaux (3) sortant d'une paroi de formage (4) pour former des poils, dans lequel une matière fondue constituant les poils est introduite sous pression dans les canaux (3) par moulage par injection ou sous pression, **caractérisé en ce que** le support (7) est mis directement ou indirectement en contact avec la paroi de formage (4) présentant les canaux (3) de telle façon que les sections libres (6) des canaux (3) soient entièrement recouvertes, et qu'ensuite la matière fondue est appliquée sur le support (7) avec une pression de formage telle, que le support (7) est transpercé dans la zone des sections libres (6) des canaux (3) et qu'ainsi le matériau du support est repoussé et qu'enfin la matière fondue remplit les canaux (3), procédé dans lequel le support (7) à faire traverser par la matière fondue sert de barrière de retenue de pression à la matière fondue durant le moulage par injection jusqu'au début de la pénétration de la matière fondue à travers le support, suite à quoi la matière fondue pénètre de manière explosive dans les canaux (3) formant les poils.

2. Procédé selon la revendication 1, **caractérisé en ce que** le matériau de support refoulé par la matière fondue lors de la pénétration dans le support se trouve au moins partiellement dans les ouvertures des canaux.

3. Procédé selon la revendication 1 ou 2, **caractérisé en ce que** le matériau du support repoussé par la matière fondue lors de la traversée du support est conformé en col pénétrant dans l'ouverture des canaux.

4. Procédé selon l'une quelconque des revendications 1 à 3, **caractérisé en ce que** le matériau du support repoussé par la matière fondue lors de la traversée du support est conformé dans le support en formant une ouverture en entonnoir dans le support.

5. Procédé selon l'une quelconque des revendications 1 à 4, **caractérisé en ce que** les canaux formant les poils présentent dans la zone de leur ouverture un élargissement pour recevoir le matériau du support conformé en col.

6. Procédé selon l'une quelconque des revendications 1 à 5, **caractérisé en ce que** le matériau du support repoussé par la matière fondue lors de la pénétration dans le support forme un alliage avec la matière fondue.

7. Procédé selon l'une quelconque des revendications 1 à 6, **caractérisé en ce que**, dans ses zones recouvrant les ouvertures des canaux, le support est muni de ou présente des structures affaiblissant les matériaux.

8. Procédé selon l'une quelconque des revendications 1 à 7, **caractérisé en ce que** l'on dispose sur le support des structures de zones de rupture disposées symétriquement radiales.

9. Procédé selon l'une quelconque des revendications 1 à 8, **caractérisé en ce qu'**avant la mise en contact avec la paroi de formage, le support est revêtu, dans celles de ses zones recouvrant les ouvertures des canaux, d'une couche moins épaisse que dans les autres zones.

10. Procédé selon l'une quelconque des revendications 1 à 9, **caractérisé en ce que** dans le moule situé devant les canaux on met en place au moins un support supplémentaire présentant des ouvertures en alignement et **en ce que** le support devant être traversé par la matière fondue est disposé de manière à couvrir les ouvertures du support supplémentaire.

11. Procédé selon l'une quelconque des revendications 1 à 9, **caractérisé en ce que** dans le moule situé devant les canaux on met en place au moins un support supplémentaire présentant des ouvertures en alignement et **en ce que** le support devant être traversé par la matière fondue est disposé entre le support supplémentaire et les ouvertures des canaux.

12. Procédé selon l'une quelconque des revendications 1 à 11, **caractérisé en ce que** le support est constitué de matériaux organiques ou inorganiques.

13. Procédé selon l'une quelconque des revendications 1 à 12, **caractérisé en ce que** le support agit comme une barrière maintenant la pression jusqu'à une pression interne de moule de 1000 à 5000 bar.

14. Procédé selon l'une quelconque des revendications 1 à 13, **caractérisé en ce que** le support est réalisé dans une feuille, de préférence une feuille extensible.

15. Procédé selon la revendication 14, **caractérisé en ce que** le support est réalisé dans une feuille de métal.

16. Procédé selon la revendication 14, **caractérisé en ce que** le support est réalisé dans une feuille de matière plastique.

17. Procédé selon la revendication 16, **caractérisé en ce que** le support est réalisé dans une feuille en élastomère.

18. Procédé selon l'une quelconque des revendications 14 à 17, **caractérisé en ce que** la feuille présente une épaisseur de préférence inférieure ou égale à 1 mm.

19. Procédé selon l'une quelconque des revendications 1 à 13, **caractérisé en ce que** le support est constitué par une plaque.

20. Procédé selon la revendication 19, **caractérisé en ce que** la plaque présente une épaisseur de préférence égale ou supérieure à 0,2 mm.

21. Procédé selon l'une quelconque des revendications 1 à 20, **caractérisé en ce que** le support est constitué de deux couches ou davantage.

22. Procédé selon la revendication 21, **caractérisé en ce que** dans le cas d'un support constitué de deux couches ou davantage, au moins une des couches recouvre les ouvertures des canaux et au moins une couche supplémentaire présente des ouvertures préformées correspondant à la disposition des canaux.

23. Procédé selon la revendication 21 ou 22, **caractérisé en ce que** les deux couches ou davantage consistent en des matériaux différents.

24. Procédé selon l'une quelconque des revendications 21 à 23, **caractérisé en ce que** les deux couches ou davantage présentent une élasticité différente.

25. Procédé selon l'une quelconque des revendications 1 à 24, **caractérisé en ce que** le support est amené dans le moule ouvert sous la forme d'une pièce moulée préformée.

26. Procédé selon la revendication 25, **caractérisé en ce que** le support est amené sous la forme d'une pièce moulée préformée par soufflage.

27. Procédé selon la revendication 25, **caractérisé en ce que** le support est amené sous la forme d'une pièce moulée préformée par injection.

28. Procédé selon la revendication 25, **caractérisé en ce que** le support est amené sous la forme d'une pièce préformée réalisée par emboutissage.

29. Procédé selon l'une quelconque des revendications 1 à 28, **caractérisé en ce que** les supports sont amenés dans le moule ouvert sous la forme d'un matériau sans fin et sont coupés à la dimension prévue avant ou lors de la fermeture du moule.

30. Procédé selon l'une quelconque des revendications 1 à 28, **caractérisé en ce que** les supports à dimension prévue sont acheminés sur une surface sans fin et sont séparés du support dans la zone de l'outil de formage.

31. Procédé selon l'une quelconque des revendications 1 à 30, **caractérisé en ce que** le matériau du support recouvrant les sections libres des canaux peut être soudé au matériau des poils.

32. Procédé selon l'une quelconque des revendications 1 à 31, **caractérisé en ce que** l'on introduit par lots dans le moule des matières plastiques constituant les poils à propriétés mécaniques différentes.

33. Procédé selon l'une quelconque des revendications 1 à 32, **caractérisé en ce que** l'on introduit par lots dans le moule des matières plastiques constituant les poils de couleurs différentes.

34. Procédé selon l'une quelconque des revendications 1 à 33, **caractérisé en ce que** le matériau du support est introduit dans le moule sous la forme d'une pièce brute ou d'un flan et qu'il est formé par la pression de formage de la matière fondue formant les poils sur la paroi de formage entourant les sections libres des canaux, avant que la matière fondue ne traverse le support formé.

35. Procédé selon l'une quelconque des revendications 1 à 33, **caractérisé en ce que** le matériau du support est introduit dans le moule sous la forme d'une pièce brute ou d'un flan et qu'il est formé par la pression fluidique sur la paroi de formage entourant les sections libres des canaux, avant que la matière en fusion ne soit amenée dans le moule à une pression de formage plus élevée.

36. Procédé selon l'une quelconque des revendications 1 à 33, **caractérisé en ce que** le matériau du support et la matière fondue formant les poils sont introduits dans le moule selon le procédé d'injection "sandwich".

37. Procédé selon la revendication 36, **caractérisé en ce que** le procédé d'injection "sandwich" est utilisé selon la technique monotir ou tir jumelé.

38. Procédé selon l'une quelconque des revendications 1 à 33, **caractérisé en ce que** le matériau du support est préformé selon le procédé GIT (technologie par injection de gaz) ou introduit dans le moule et **en ce que** la matière fondue pour les poils est injectée ultérieurement.

39. Procédé selon l'une quelconque des revendications 1 à 33, **caractérisé en ce que** le matériau du support est préformé selon le procédé WIT (technologie par injection d'eau = hydroformage) ou introduit dans le moule et **en ce que** la matière fondue pour les poils est injectée ultérieurement.
